Europäisches Patentamt

European Patent Office

Office européen des brevets

(11) Veröffentlichungsnummer: **0 076 873**
A1

## (12) EUROPÄISCHE PATENTANMELDUNG

(21) Anmeldenummer: 81108257.7

(22) Anmeldetag: 13.10.81

(51) Int. Cl.³: **B 01 D 46/02**, B 01 D 46/00

(43) Veröffentlichungstag der Anmeldung: 20.04.83
Patentblatt 83/16

(71) Anmelder: **Mannesmann AG, Mannesmannufer 2,
D-4000 Düsseldorf 1 (DE)**

(84) Benannte Vertragsstaaten: **AT BE CH DE FR GB IT LI LU
NL SE**

(72) Erfinder: **Öry, Huba, Prof. Dr.-Ing., Schurzelter
Strasse 514, D-5100 Aachen (DE)**

(54) **Staubabscheidergehäuse in Leichtbauweise für Saugschlauchfilter, insbesondere mit einer kreiszylindrischen Grundform, und Verfahren zum Montieren des Gehäuses.**

㉗ Derartige Staubscheidergehäuse in Leichtbauweise für Saugschlauchfilter sind insbesondere mit einer kreiszylindrischen Grundform versehen. Derartige Staubabscheider arbeiten unter innerem Unterdruck, so daß außen auf dem Gehäuse der Atmosphärendruck lastet, der das Gehäuse beansprucht. Entsprechend der hohen Beanspruchung sind diese Staubabscheidergehäuse aus zylindrischen Schalen mit einer Wanddicke von einigen Millimetern gebaut.

Um für Großfilter von mehreren Metern Durchmesser entsprechend hohe Gewichte zu vermeiden und um trotzdem die notwenige Steifigkeit des Gehäuses zu erzielen sowie auch die Herstellung derartig dickwandiger Bauteile und die dafür erforderlichen Formmaschinen wirtschaftlich einzusetzen, wird vorgeschlagen, daß bei einem derartigen Staubabscheidergehäuse zumindest einzelne Wandabschnitte (2 bis 5) aus relativ dünnen, durch Profilierungen (6) versteifte Platten- bzw. Bandmaterialien (7) hergestellt sind, daß die Wandabschnitte (2 bis 5) aus jeweils an den Stoßstellen (9) überlappend geschlossenen und verspannten Ringen (8) gebildet sind und daß mehrere Wandabschnitte (2 bis 5) mittels Stützen (11) gegen Durchbiegung, Beulung und dergleichen Beanspruchungen gesichert sind. Die Platten bzw. Bandmaterialien (7) sind hierbei aus dünnen, profilierten Stahlblechen mit einer Materialdicke unter einem Millimeter hergestellt. Die Profilierungen (6) sind wellenförmig, trapezförmig oder dreieckförmig und ggf. mittels Sicken versteift. Die Stützen (11) und die Wandabschnitte (2 bis 5) sind mittels beide durchdringenden Schrauben (13) oder Nieten miteinander verbunden und die Schraubenlöcher (18) bzw. Nietverbindungen sind abgedichtet ausgeführt. Außerdem wird ein Verfahren zum Montieren des Gehäuses beschrieben.

Die Erfindung betrifft ein Staubabscheidergehäuse in Leichtbauweise für Saugschlauchfilter, insbesondere mit einer kreiszylindrischen Grundform, und ein Verfahren zum Montieren des Gehäuses.

Derartige Staubabscheidergehäuse mit Saugschlauchfiltern arbeiten unter innerem Unterdruck, so daß außen auf dem Gehäuse der Atmosphärendruck lastet, der das Gehäuse beansprucht.

Die bekannten Staubabscheidergehäuse für Saugschlauchfilter sind aus zylindrischen Schalen gebaut. Für Großfilter von mehreren Metern Durchmesser werden Wanddicken von einigen Millimetern (in einem praktischen Fall bis zu 8 mm) benötigt, um die notwendige Steifigkeit des Gehäuses zu erzielen, wobei zusätzlich Versteifungsringe außen und innen vorzusehen sind. Die Herstellung derartig dickwandiger Bauteile und die dafür erforderlichen Formmaschinen sind aufwendig und daher teuer. Außerdem weisen derartige, aus dickwandigen Schalen bestehende Großfilter ein erhebliches Gewicht auf, das bei Anordnung des Großfilters über Flurhöhe, d. h. beispielsweise auf Gebäuden oder Podesten die unterstützenden Bauteile zusätzlich belastet.

Es ist schon eine Luftfilteranordnung vorgeschlagen worden, die ein zylindrisches Außengehäuse aufweist, das zur Versteifung aus Wellblech bestehen kann (DE-B2-24 30 279). Weitere Anweisungen zur Ausführung einer derartigen Leichtbauweise sind jedoch nicht bekannt.

Der Erfindung liegt die Aufgabe zugrunde, für Großfilter der Saugschlauchfilter-Bauart eine druckfeste, in der Herstellung wenig aufwendige Leichtbauweise vorzuschlagen.

Die gestellte Aufgabe wird bei dem eingangs bezeichneten Staubabscheidergehäuse dadurch gelöst, daß zumindest einzelne Wandabschnitte aus relativ dünnen, durch Profilierungen versteifte Platten- bzw. Bandmaterialien hergestellt sind, daß die Wandabschnitte aus jeweils an den Stoßstellen überlappend geschlossenen und verspannten Ringen gebildet sind und daß mehrere Wandabschnitte mittels Stützen gegen Durchbiegung, Beulung und dgl. Beanspruchung gesichert sind.

.....

Diese Maßnahmen gewährleisten ein leicht herstellbares, druckfestes und im übrigen leichtgewichtiges Staubabscheidergehäuse für Großfilter, das die Nachteile der bekannten Staubabscheidergehäuse nicht mehr aufweist.

Ein äußerst stabiles und dennoch leichtes Staubabscheidergehäuse kann nach dem erfindungsgemäßen Prinzip auch für Großfilter geschaffen werden, indem die Wandabschnitte aus dünnen, profilierten Stahlblechen mit einer Materialdicke unter einem Millimeter hergestellt sind.

Aus herstellungstechnischen Gründen ist es für Großfilter mit kreiszylindrischer Grundform außerdem vorteilhaft, daß die Profilierung horizontal verlaufende Rillen bildet.

Eine hohe Festigkeit bei geringstem Materialaufwand wird ferner dann erzielt, wenn die Profilierung wellenförmig, trapezförmig oder dreieckförmig und ggf. mittels Sicken versteift ist.

Die unaufwendige Fertigung wird dadurch erzielt, daß die Profilierung im Walzverfahren hergestellt ist.

Die notwendige Festigkeit des Staubabscheidergehäuses gegenüber dem äußeren Oberdruck wird auch dadurch verbessert, daß die Stützen zur Profilierung quer, insbesondere senkrecht verlaufen.

Hierbei ist es vorteilhaft, daß die Stützen und die Wandabschnitte mittels beide durchdringenden Schrauben oder Nieten miteinander verbunden sind und daß die Schraubenlöcher bzw. die Nietverbindungen abgedichtet sind.

Für die Montage des Staubabscheidergehäuses ist es zweckmäßig, wenn die Stützen vorzugsweise außen angeordnet sind.

Beim Montieren ist das geringe Gewicht der einzelnen Wandabschnitte schon vorteilhaft. Weitere Vorteile werden jedoch dann erzielt, wenn zunächst das Dach auf den zukünftigen obersten Ring montiert wird, danach der oberste Ring mittels mehrerer über den Umfang verteilter Hubvorrichtungen angehoben, ein weiterer Ring bzw. weitere Ringe horizontal eingeschoben und mehrere Ringe jeweils mittels der Stützen miteinander verbunden werden.

Ein Ausführungsbeispiel der Erfindung ist in der Zeichnung dargestellt und wird im folgenden näher beschrieben. Es zeigen

Fig. 1 das erfindungsgemäße Staubabscheidergehäuse im Aufriß, teilweise geschnitten,

Fig. 2 einen horizontalen Schnitt durch Fig. 1 als Ausschnitt,

Fig. 3 einen senkrechten Schnitt durch die Verbindungsstelle von Wandabschnitt und Stütze als Explosionsdarstellung,

die Fig. 4, 5 und 6 den Montagevorgang für das erfindungsgemäße Staubabscheidergehäuse.

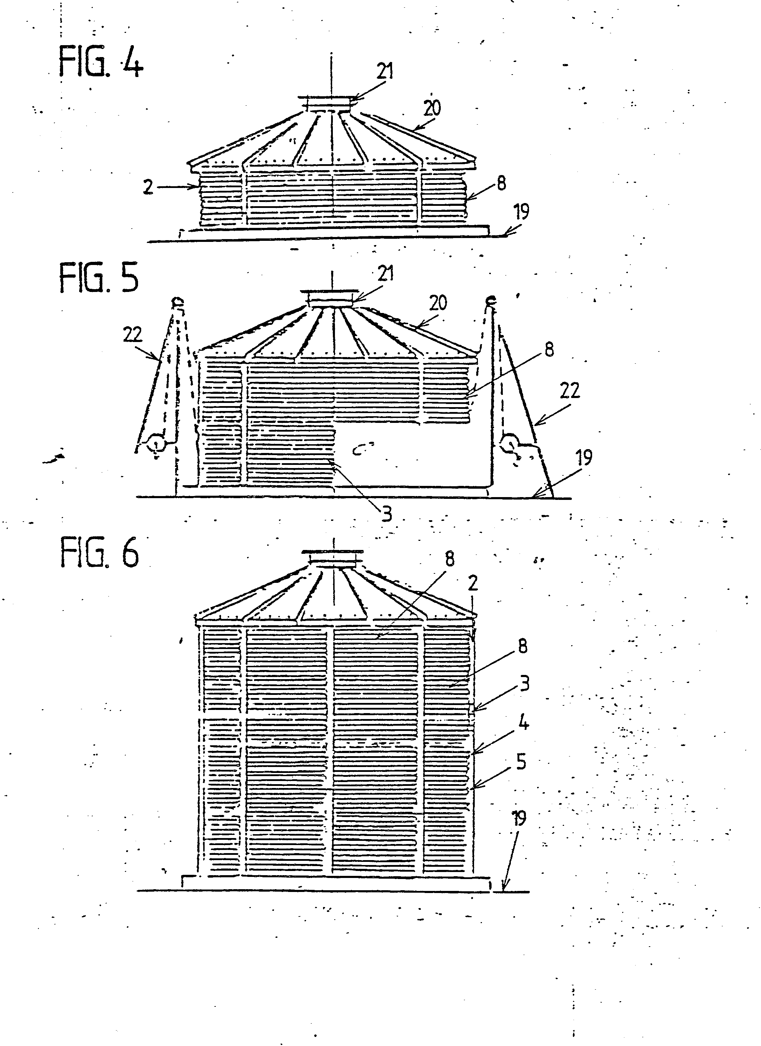

Das dargestellte Staubabscheidergehäuse weist eine kreiszylindrische Grundform 1 auf und besteht aus mehreren (in den Figuren 4 bis 6 z. B. aus vier) Wandabschnitten 2, 3, 4 und 5.

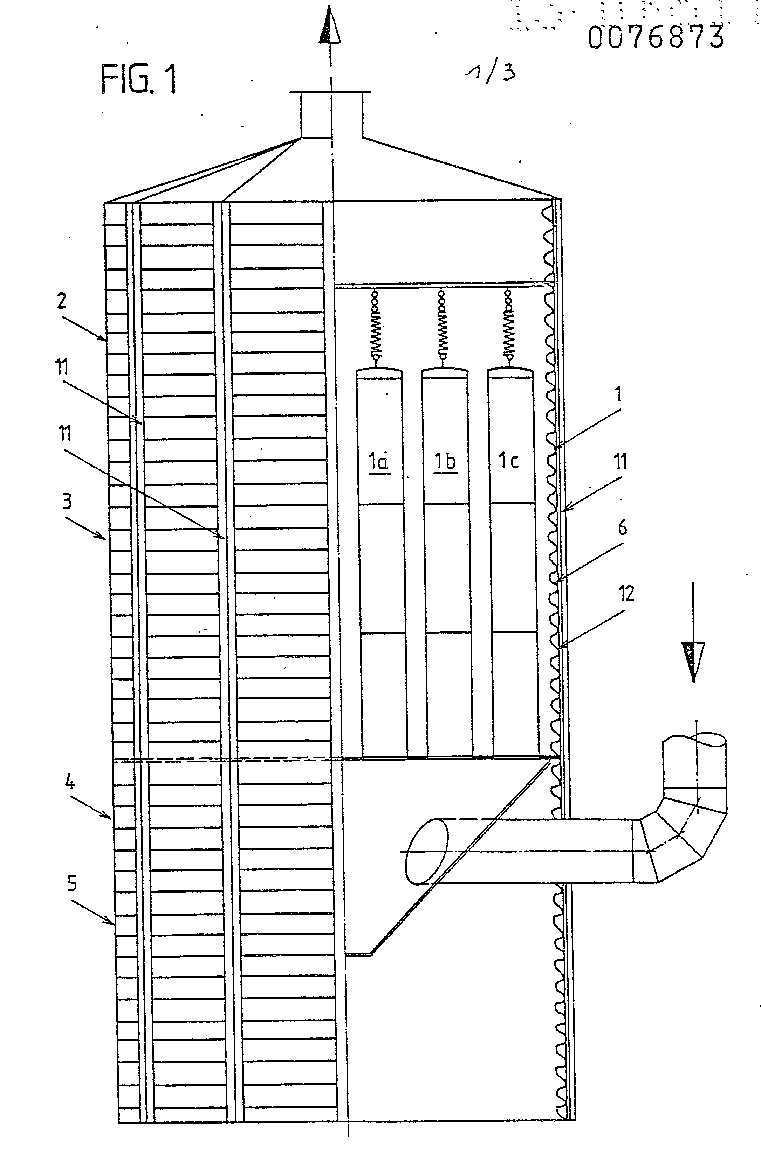

Derartige Staubabscheider werden, wie in Fig. 1 mit Pfeilen angegeben ist, mit staubbeladenem Rohgas (Eingangspfeil) beaufschlagt, das durch die Saugschlauchfilter 1a, 1b und 1c geführt und gereinigt wird und als Reingas den Staubabscheider wieder verläßt (Ausgangspfeil).

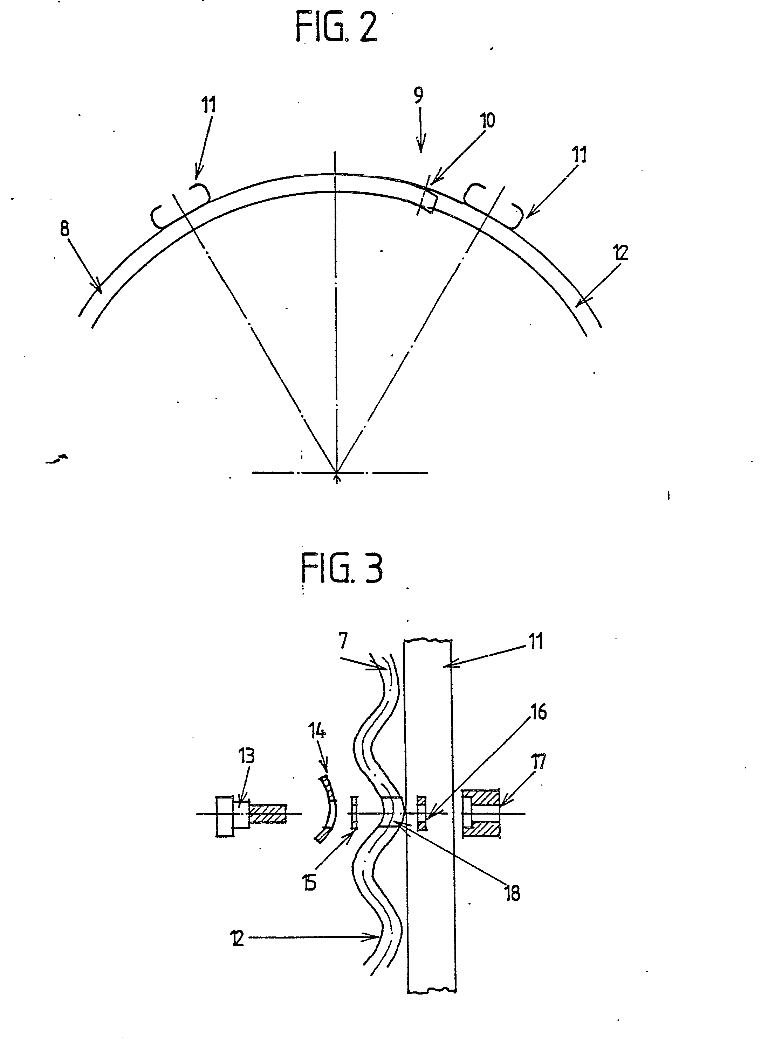

Jeder der Wandabschnitte 2 bis 5 ist aus relativ dünnen, durch Profilierungen 6 versteiften Platten- oder Bandmaterialien 7 gefertigt. Die Platten oder Bandmaterialien 7 sind zu Ringen 8 geformt und an den Stoßstellen 9 überlappend geschlossen (Fig. 2) und mittels Verschraubungen 10, wie in Fig. 3 gezeigt, verspannt.

. . . . .

Mehrere Wandabschnitte (2 bis 5) werden (im Ausführungsbeispiel von außen) mittels der Stützen 11 gegen Durchbiegung, Beulung und andere Beanspruchungsarten gesichert. Das Platten- oder Bandmaterial 7 besteht aus dünnem Stahlblech verhältnismäßig weicher Güte, das für die Verformung im Walzverfahren geeignet ist. Vorsorglich sollte das Stahlblech verzinkt sein. Die Verformung erstreckt sich auf horizontal verlaufende Rillen 12, die Wellenform, Trapezform oder Dreiecksform aufweisen. Als zusätzliche Versteifung werden auch Sicken vorteilhaft angewendet (nicht gezeichnet).

Die Verbindung der Stützen 11 mit den Wandabschnitten 2 bis 5 erfolgt mittels der Schrauben 13 (Fig. 3), der Wellscheibe 14, einer gegen korrodierende elektrochemische Einflüsse isolierenden Kunststoffscheibe 15 einerseits und der weiteren Kunststoffscheibe 16 und der Gewindemutter 17 andererseits. Die Kunststoffscheiben 15 und 16 dichten hierbei die Schraubenlöcher 18 gegen das Durchdringen von Flüssigkeiten ab. Anstelle von Schrauben 13 und Gewindemuttern 17 verwendete Nietverbindungen sind in ähnlicher Weise abzudichten.

Die Montage erfolgt zunächst (Fig. 4) aufgrund eines ersten Ringes 8, der auf Flurhöhe 19 (oder einem höheren Niveau) fertiggestellt wird, auf dem das Dach 20 montiert ist, das mit dem Abzug 21 versehen ist. Dieser Ring 8 wird mit Hilfe mehrerer über den Umfang verteilter Hubvorrichtungen 22 (Fig. 5) um die Höhe eines weiteren Ringes 8 (Wandabschnitt 3) angehoben und danach weitere Wandabschnitte 3, 4, 5 zu weiteren Ringen 8 montiert. Auf diese Weise entsteht nach Montage der Stützen 11 das in den Figuren 1 und 6 fertiggestellte Staubabscheidergehäuse.

Der nach diesem Verfahren hergestellte Staubabscheider wird danach mit den üblichen Ausrüstungen für das Entstauben (Schlauchfilter) bzw. für den Betrieb (Wartungseinrichtungen) versehen.

0076873

Mannesmann Aktiengesellschaft

Mannesmannufer 2

4000 Düsseldorf

9. Oktober 1981

21 382 - Fl/Schi

---

Staubabscheidergehäuse in Leichtbauweise für Saugschlauchfilter,
insbesondere mit einer kreiszylindrischen Grundform,
und Verfahren zum Montieren des Gehäuses

---

## Patentansprüche

1. Staubabscheidergehäuse in Leichtbauweise für Saugschlauchfilter,
insbesondere mit einer kreiszylindrischen Grundform,
dadurch gekennzeichnet,
daß zumindest einzelne Wandabschnitte (2 bis 5) aus relativ dünnen,
durch Profilierungen (6) versteifte Platten- bzw. Bandmaterialien
(7) hergestellt sind, daß die Wandabschnitte (2 bis 5) aus jeweils
an den Stoßstellen (9) überlappend geschlossenen und verspannten
Ringen (8) gebildet sind und daß mehrere Wandabschnitte (2 bis 5)
mittels Stützen (11) gegen Durchbiegung, Beulung und dgl.
Beanspruchungen gesichert sind.

2. Staubabscheidergehäuse nach Anspruch 1,
dadurch gekennzeichnet,
daß die Wandabschnitte (2 bis 5) aus dünnen, profilierten Stahlblechen
mit einer Materialdicke unter einem Millimeter hergestellt sind.

......

0076873

3. Staubabscheidergehäuse nach den Ansprüchen 1 und 2,
   dadurch gekennzeichnet,
   daß die Profilierung (6) horizontal verlaufende Rillen (12) bildet.

4. Staubabscheidergehäuse nach den Ansprüchen 1 bis 3,
   dadurch gekennzeichnet,
   daß die Profilierung (6) wellenförmig, trapezförmig oder dreieckförmig
   und gegebenenfalls mittels Sicken versteift ist.

5. Staubabscheidergehäuse nach den Ansprüchen 1 bis 4,
   dadurch gekennzeichnet,
   daß die Profilierung (6) im Walzverfahren hergestellt ist.

6. Staubabscheidergehäuse nach einem oder mehreren der Ansprüche
   1 bis 5,
   dadurch gekennzeichnet, daß die Stützen (11) zur Profilierung (6)
   quer, insbesondere senkrecht verlaufen.

7. Staubabscheidergehäuse nach den Ansprüchen 1 bis 6,
   dadurch gekennzeichnet,
   daß die Stützen (11) und die Wandabschnitte (2 bis 5) mittels beide
   durchdringenden Schrauben (13) oder Nieten miteinander verbunden
   sind und daß die Schraubenlöcher (18) bzw. die Nietverbindungen
   abgedichtet sind.

8. Staubabscheidergehäuse nach den Ansprüchen 1 bis 7,
   dadurch gekennzeichnet,
   daß die Stützen (11) vorzugsweise außen angeordnet sind.

. . . . .

9.  Verfahren zum Montieren des Gehäuses nach den Ansprüchen 1 bis 8,
    dadurch gekennzeichnet,
    daß zunächst das Dach (20) auf den zukünftigen obersten Ring (8)
    montiert wird, danach der oberste Ring (8) mittels mehrerer über den
    Umfang verteilter Hubvorrichtungen (22) angehoben, ein weiterer Ring
    (8) bzw. weitere Ringe (8) horizontal eingeschoben und mehrere Ringe
    (8) jeweils mittels der Stützen (11) miteinander verbunden werden.

. . . . .

FIG. 1

1a  1b  1c

FIG. 2

FIG. 3

FIG. 4

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-1 407 904   (AMERICAN AIR FILTER CO.) | | B 01 D 46/02<br>B 01 D 46/00 |
| A | DE-C- 151 665  (G.G. KIEFER) | | |

| | | | |
|---|---|---|---|
| | | | RECHERCHIERTE SACHGEBIETE (Int. Cl. 3) |
| | | | B 01 D 46/00<br>B 01 D 27/00 |

Der vorliegende Recherchenbericht wurde für alle Patentansprüche erstellt.

| Recherchenort | Abschlußdatum der Recherche | Prüfer |
|---|---|---|
| DEN HAAG | 23-07-1982 | BOGAERTS M.L.M. |